Europäisches Patentamt

European Patent Office

Office européen des brevets

(11) Veröffentlichungsnummer: **0 348 748**
**A1**

## (12) EUROPÄISCHE PATENTANMELDUNG

(21) Anmeldenummer: 89110899.5

(22) Anmeldetag: 15.06.89

(51) Int. Cl.4: **C04B 37/00**

(30) Priorität: 28.06.88 DE 3821804

(43) Veröffentlichungstag der Anmeldung:
03.01.90 Patentblatt 90/01

(84) Benannte Vertragsstaaten:
AT BE CH DE FR GB IT LI LU NL SE

(71) Anmelder: **INTERATOM Gesellschaft mit beschränkter Haftung**
**Friedrich-Ebert-Strasse**
**D-5060 Bergisch-Gladbach 1(DE)**

Anmelder: **DIDIER-WERKE AG**
**Postfach 2025**
**D-6200 Wiesbaden(DE)**

(72) Erfinder: **Yarahmadi, Mohamed, Dr.**
**Eichhornstrasse 18**
**D-6400 Fulda(DE)**
Erfinder: **Kainer, Hartmut, Dr.**
**Am Güldenplan 26**
**D-6200 Wiesbaden 12(DE)**
Erfinder: **Sommerer, Jürgen**
**Langegärten 7**
**D-6229 Rauenthal(DE)**

(74) Vertreter: **Mehl, Ernst, Dipl.-Ing. et al**
**Postfach 22 13 17**
**D-8000 München 22(DE)**

(54) **Verfahren zum stoffschlüssigen Verbinden von Werkstücken grosser Abmessungen aus siliciuminfiltriertem Siliciumcarbid und Vorrichtung zu dessen Durchführung.**

(57) Zum Löten von SiSiC-Komponenten (1, 3), deren Abmessungen eine Unterbringung in Lötöfen herkömmlicher Art nicht zulassen, ist vorgesehen, dicht abschließende Schalen (6, 7) zu verwenden, die um die Verbindungsstelle herum angeordnet werden. So wird mittels einer Leitung (17) örtlich die erforderliche Schutzgasatmosphäre oder ein Vakuum geschaffen; auch die Erhitzung wird nur örtlich mittels eines Heizelementes (5), das Wärme abstrahlt, vorgenommen. Die Abdichtung der Schalen (6, 7) gegenüber den Werkstücken (1, 3) erfolgt durch Dichtungen (9, 10). Dabei kann es sich um hintereinander angeordnete Elastomerdichtungen (9) und Metalldichtungen (10) handeln. Die Schalen (6, 7) können aus miteinander zu verschraubenden Teilschalen bestehen. Die Wärmeisolierung (15), z.B. aus SiC-Whisker, begrenzt die Wärmeabstrahlung von der Verbindungsstelle der Beiden Werkstücke (1, 3).

FIG 1

## Verfahren zum stoffschlüssigen Verbinden von Werkstücken großer Abmessungen aus siliciuminfiltriertem Siliciumcarbid und Vorrichtung zu dessen Durchführung

Die vorliegende Erfindung betrifft ein Verfahren zum stoffschlüssigen Verbinden von Werkstücken großer Abmessungen aus siliciuminfiltriertem Siliciumcarbid durch Löten an der Verbindungsstelle. Sie betrifft weiterhin eine Vorrichtung zur Durchführung des Verfahrens.

Der Werkstoff siliciuminfiltriertes Siliciumcarbid (SiSiC) findet aufgrund seiner guten mechanischen und chemischen Eigenschaften zunehmend Beachtung. Verbindungen von mehreren Teilen oder Werkstücken aus diesem Werkstoff werden zum einen in herkömmlich formschlüssiger Weise (z.B. durch Gewinde) hergestellt; solche Verbindungen können jedoch bei erhöhten Anforderungen an die Dichtigkeit nicht befriedigen. Solche Verbindungen werden zum anderen durch Löten hergestellt; hierzu sind besondere Lote, z.B. aus einer Titansiliciumlegierung, entwickelt worden. Diese Löttechnik erfordert sowohl die Anwendung sehr hoher Temperaturen (von ca. 1400˚C) als auch das Arbeiten unter Vakuum oder einem Inertgas. Diese Lötungen sind bislang in Lötöfen durchgeführt worden, die groß genug waren, um mindestens zwei miteinander zu verbindende Teil zusammen aufzunehmen. Aus praktischen Gründen ist jedoch die Größe dieser Lötöfen begrenzt. Sie reicht z.B. nicht aus, um Großkomponenten, wie z.B. Wärmetauscher von ca. 10 m Länge und ca. 1 m Durchmesser, aufzunehmen.

Aufgabe der vorliegenden Erfindung ist die Angabe eines Verfahrens, das es gestattet, Teile aus SiSiC zu großen Komponenten zusammenzufügen bei gleichzeitiger Geringhaltung des apparativen Aufwandes. Weiterhin liegt der Erfindung die Aufgabe zugrunde, eine geeignete Vorrichtung zur Durchführung des Verfahrens anzugeben.

Die erstgenannte Aufgabe wird erfindungsgemäß dadurch gelöst, daß die Werkstücke im Bereich der Verbindungsstelle jeweils von einer dicht schließenden Schale umgeben werden, daß der Zwischenraum zwischen jeder Schale und dem Werkstück unter Vakuum gehalten oder mit einem Inertgas gefüllt wird, und daß die mit Lot versehene Verbindungsstelle örtlich auf Löttemperatur erhitzt wird.

Die Schalen sind dabei abhängig von der jeweiligen Geometrie der miteinander zu verbindenden Teile (Werkstücke) ausgestaltet oder geformt. Sie schaffen einen im wesentlichen auf die Verbindungsstelle beschränkten, gegenüber der Umgebung abgeschlossenen Raum, in dem die zur Durchführung des genannten Lötprozesses erforderlichen Bedingungen mit geringem Aufwand hergestellt werden können. Zunächst wird in die Fuge zwischen den Teilen Lot eingebracht. Durch die folgende, nur örtliche Erhitzung der Verbindungsstelle wird gegenüber der herkömmlichen großflächigen Erhitzung eine erhebliche Reduzierung des Energieaufwandes erzielt. Der Energieaufwand kann bei mehreren Verbindungsstellen genau auf deren möglicherweise unterschiedliche Erfordernisse abgestellt werden.

Die zweitgenannte Aufgabe bezüglich der Angabe einer Vorrichtung wird erfindungsgemäß dadurch gelöst, daß für jedes Werkstück eine Schale vorgesehen ist, die so geformt sind, daß durch sie gemeinsam die Werkstücke im Bereich der Verbindungsstelle unter Bildung eines Zwischenraumes gasdicht einschließbar sind, daß eine Zuleitung zum Zwischenraum vorgesehen ist, über die dieser Zwischenraum unter Vakuum haltbar und mit einem Inertgas füllbar ist, und ein Heizelement vorgesehen ist, mit dem die Verbindungsstelle örtlich auf Löttemperatur aufheizbar ist.

Eine bevorzugte Art des zur Aufheizung der Verbindungsstelle auf die Löttemperatur zu verwendenden Heizelementes sieht vor, daß dieses aus Wolfram, Iridium oder Molybdän besteht. Da es sich dabei um Werkstoffe handelt, die auch bei hoher Temperatur beständig sind, wird eine möglicherweise schädliche Kontamination des Strukturmaterials mit fremden Stoffen vermieden.

Wenn die genannten Schalen mit vertretbarem Aufwand bereitgestellt werden sollen, müssen diese aus einem leicht zu bearbeitenden und verhältnismäßig preiswerten Material bestehen, z.B. aus einem Metall wie Kupfer. Ein solches Material darf jedoch nicht der für den Lötprozeß erforderlichen hohen Temperatur ausgesetzt werden. Um dieses zu erreichen, ist nach einer Weiterbildung vorgesehen, daß die Schalen kühlbar sind.

Eine ausreichende Abdichtung des Raumes oder Spaltes zwischen dem Werkstück und der Schale läßt sich, auch mit Rücksicht auf die unterschiedlichen Wärmeausdehnungskoeffizienten der beiden Teile, am zuverlässigsten mit einer Dichtung erreichen, die aus einem Elastomer hergestellt ist. Diese Dichtung kann dabei in einiger Entfernung von der Verbindungsstelle, und damit an einem Ort niedrigerer Temperatur, angeordnet werden. Dies erhöht jedoch unnötig die erforderliche Größe der Schale. Dies bietet auch dann noch keine Gewähr dafür, daß die für den Dichtungsstoff zulässige Temperatur nicht überschritten wird. Daher ist die Elastomer-Dichtung nach einer Weiterbildung bevorzugt kühlbar.

Zweckmäßigerweise in Verbindung hiermit wird nach einer weiteren Ausgestaltung von einer plastisch verformbaren, metallischen Dichtung Gebrauch gemacht. Die metallische Dichtung ist dabei die eine Hälfte einer Doppeldichtung, deren andere Hälfte aus einem elastomeren Stoff hergestellt ist. Die metallische Dichtung ist dabei an der der Verbindungsstelle (d.h. der erhöhten Temperatur) zugewandten Seite angeordnet. Bevorzugt ist hier der Anwendungsfall des Einlötens von SiSiC-Rohren in SiSiC-Rohrböden ins Auge gefaßt. Dafür ist vorgesehen, daß eine erste, am Rohrboden gasdicht anliegende und eine zweite, das einzulötende Rohr teilweise umfassende Schale vorhanden sind.

Eine weitere Ausgestaltung zeichnet sich dadurch aus, daß das Heizelement im Inneren des Rohres im Bereich des Rohrbodens angeordnet ist. Auch kann so vorgegangen werden, daß das Rohr an seinem freien Ende mit einem Stopfen fest verschlossen ist. Weiterhin kann vorgesehen sein, daß im Raum zwischen der Verbindungsstelle und den Schalen sowie im freien Ende des Rohres jeweils eine Wärmeisolierung angeordnet ist. Durch diese Maßnahmen kann sowohl der Abschluß der Verbindungsstelle gegenüber der Atmosphäre als auch ein zusätzlicher Schutz von Schale und Dichtung gegenüber der Wärmestrahlung erreicht werden.

Aber auch das stumpfe Aneinanderlöten von Rohren oder Rohrschüssen ist möglich. Eine entsprechende Ausgestaltung zeichnet sich dadurch aus, daß eine erste und eine zweite Schale vorgesehen sind, durch die der erste bzw. zweite Rohrschuß gasdicht hindurchführbar sind.

Gemäß einer weiteren Ausgestaltung der Erfindung kann das Heizelement die Gestalt mehrerer, parallel zur Längsachse der Rohrschüsse um diese gruppierter Heizdrähte aufweisen, um eine über den Umfang gleichmäßige Erhitzung der Lötstelle zu gewährleisten.

Ausführungsbeispiele der Erfindung sind im Längsaxialschnitt in der Zeichnung dargestellt.

FIG 1 zeigt eine Vorrichtung für das Befestigen von Rohren in einem Rohrboden durch Löten.

FIG 2 zeigt eine Vorrichtung für das Verbinden zweier Rohrschüsse zu einem längeren Rohr durch Löten.

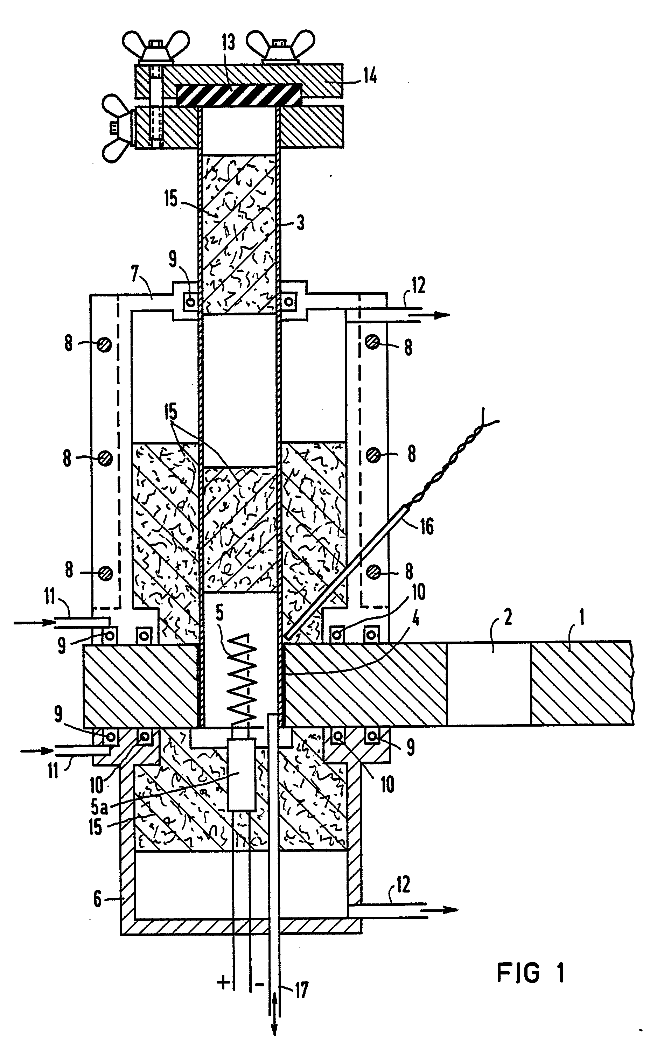

Nach FIG 1 sind in einem Rohrboden 1 (erstes Werkstück) aus SiSiC Öffnungen 2 vorhanden, in die Wärmetauscherrohre 3 (zweites Werkstück) aus dem gleichen Werkstoff fluiddicht eingesetzt werden sollen. Die Verbindung geschieht mit Hilfe eines Titansilicium-, Kobaltsilicium-, Ferrosilicium-, Kupfergold-, Glas-oder Mangansiliciumlotes 4, das vorab in Form einer Folie in den Spalt (Verbindungsstelle) zwischen der Wand der Öffnung 2 und dem Rohr 3 eingelegt wurde. Die erforderliche Erhitzung des Lotes 4 auf Löttemperatur erfolgt durch ein elektrisches Heizelement 5 aus Wolfram, Iridium oder Molybdän, das endseitig in das Rohr 3 eingeführt ist. Es kann über einen Halter 5a an eine Gleichstromquelle angeschlossen werden. Durch Strahlung auf die Innenseite des Rohres 3 wird das Rohr 3 im Bereich der Verbindungstelle erhitzt.

Die Verbindungsstelle wird an der rohrabgewandten (unteren) Seite durch eine erste, etwa topfförmig gestaltete Schale 6 von der Umgebung abgeschlossen. An der rohrzugewandten (oberen) Seite erfolgt ebenfalls ein Abschluß, und zwar durch eine zweite Schalte 7. Diese kann aus zwei durch Schrauben 8 miteinander unter Zwischenschaltung einer hier nicht gezeigten Dichtung verbundenen Halbschalen bestehen. Die Trennfuge zwischen den beiden Halbschalen liegt hier in der Zeichnungsebene. Prinzipiell kann auch die erste Schale 6 aus Teil- oder insbesondere Halbschalen bestehen. Die Schalen 6, 7 bestehen bevorzugt aus einem Metall. Das Rohr 3 ist durch die Oberseite dieser zweiten Schale 7 hindurchgeführt. Die Abdichtung der Schalen 6, 7 gegenüber dem Rohrboden 1 und dem Rohr 3 erfolgt durch randseitig bzw. durchführungsseitig eingelassene Elastomerdichtungen 9. Bei größerer Entfernung von der Verbindungsstelle und entsprechend geringerer Temperaturbelastung genügt eine solche Dichtung 9. Das ist im oberen Teil der Zeichnung bei der Durchführung des Rohres 3 durch die Oberseite der zweiten Schale 7 gezeigt. Bei den Anlagestellen an den durch Wärmeleitung ebenfalls erhitzten Rohrboden 1 sind dagegen plastisch verformbare Metalldichtungen 10 vorgeschaltet.

Eine Kühlung der Dichtungen 9, 10 und der Schalen 6, 7 erfolgt durch ein Kühlmittel, z.B. Wasser, das über Zuleitungen 11 im Bereich der Dichtungen 9 in den Innenraum der Schalen 6, 7 eintritt und über Ableitungen 12 wieder aus dem Innenraum austritt.

Über ein dünnes Rohr 17 kann im Bereich der Verbindungsstelle Vakuum erzeugt werden. Alternativ kann durch das Rohr 17 die Verbindungsstelle unter eine Schutzgasatmosphäre, z.B. Argon-, Helium- oder Stickstoffatmosphäre, gesetzt werden. Das Rohr 17 ist durch die Schale 6 in das untere Ende des Rohres 3 eingeführt.

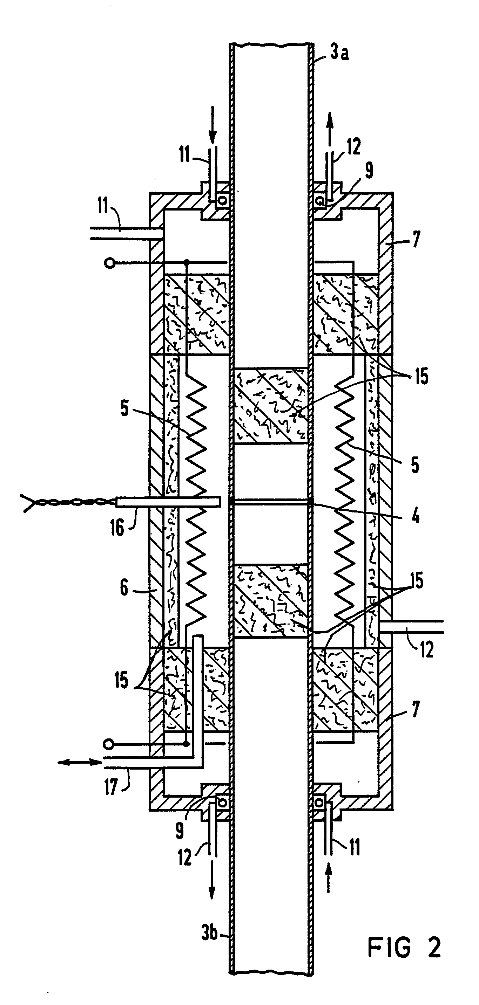

Das freie (obere) Ende des Rohres 3 ist mit einem Stopfen 13, z.B. aus Gummi, verschlossen (in Fig. 2 nicht sichtbar). Dieser Stopfen 13 wird mit Hilfe einer Spanneinrichtung 14 fest auf das Rohrende gedrückt. Ähnliche, hier nicht dargestellte Spanneinrichtungen sorgen für ein Anpressen der Schalen 6, 7 an den Rohrboden 1 und an das Rohr 3.

Der Bereich der Verbindungsstelle zwischen dem Rohrboden 1 und dem Rohr 3 ist mit einem thermischen Isoliermaterial 15, z.B. Siliciumcarbid-Whisker, abgedämmt, und zwar im Rohr 3 und in den Schalen 6, 7, um die thermische Belastung der Schalen 6, 7, des Stopfens 13 und weiterer Teile gering zu halten. Eine Kontrolle der Löttemperatur erfolgt durch ein in der Nähe der Verbindungsstelle angeordnetes Thermoelement 16. Mit dessen Hilfe kann durch Nachregelung des Stromes, der durch das Heizelement 5 fließt, die hier optimale Löttemperatur von ca. 1400°C eingehalten werden.

Rohre 3 aus SiSiC sind derzeit in Fertigungslängen nur bis zu 3 m lieferbar. Das bedingt, daß längere Rohre aus diesem Werk stoff SiSiC aus einzelnen Schüssen aufgebaut werden müssen, daß also einzelne Rohrschüsse miteinander verlötet werden müssen. Eine zum stoffschlüssigen Verbinden der einzelnen Rohrschüsse geeignete Vorrichtung ist in FIG 2 dargestellt. Für gleich wirkende Teile sind dabei dieselben Bezugszeichen wie in der FIG 1 verwendet. Dabei verläuft hier die Trennfuge zwischen den beiden längsgeteilten Halbschalen 7a, 7b senkrecht zur Zeichnungsebene und ist daher nicht sichtbar. Die beiden Rohrschüsse 3a und 3 aus SiSiC werden hier stumpf miteinander verlötet. Ein Ring aus Lot 4 ist vor dem Erhitzen zwischen die einander zugewandten Enden der Rohrschüsse 3a, 3b gelegt worden. Das Heizelement 5 zur Erzeugung der erforderlichen Löttemperatur ist hier außerhalb der beiden Rohrenden angeordnet. Insbesondere handelt es sich um ein Heizelement 5, das eine Anzahl parallel zur Längsachse der Rohrschüsse 3a, 3b angeordnete gewendelte Heizdrähte umfaßt. Die Halbschalen 7a, 7b sind so groß gestaltet, daß die Durchführung der Rohrschüsse 3a, 3b so weit von dem durch das Heizelement 5 erhitzten Bereich ab liegt, daß hier Elastomerdichtungen 9 genügen und auf Metalldichtungen 10 verzichtet werden kann.

**Ansprüche**

1. Verfahren zum stoffschlüssigen Verbinden von Werkstücken (1, 3) großer Abmessungen aus siliciuminfiltriertem Siliciumcarbid durch Löten an einer Verbindungsstelle, **dadurch gekennzeichnet,**

    a) daß die Werkstücke (1, 3; 3a, 3b) im Bereich der Verbindungsstelle jeweils von einer dicht schließenden Schale (6, 7) umgeben werden;

    b) daß der Zwischenraum zwischen jeder Schale (6, 7) und dem Werkstück (1, 3; 3a, 3b) unter Vakuum gehalten oder mit einem Inertgas gefüllt wird; und

    c) daß die mit Lot (4) versehene Verbindungsstelle örtlich auf Löttemperatur erhitzt wird.

2. Vorrichtung zum Stoffschlüssigen Verbinden von Werkstücken (1, 3) großer Abmessungen aus siliciuminfiltriertem Siliciumcabid durch Löten an einer Verbindungsstelle, zur Durchführung des Verfahrens nach Anspruch 1, **dadurch gekennzeich-**

**net,** daß für jedes Werkstück (1, 3; 3a, 3b) eine Schale (6, 7) vorgesehen ist, die so geformt sind, daß durch sie gemeinsam die Werkstücke (1, 3; 3a, 3b) im Bereich der Verbindungsstelle unter Bildung eines Zwischenraumes gasdicht einschließbar sind, daß eine Zuleitung (17) zum Zwischenraum vorgesehen ist, über die dieser Zwischenraum unter Vakuum haltbar oder mit einem Inertgas füllbar ist, und daß ein Heizelement (5) vorgesehen ist, mit dem die Verbindungsstelle örtlich auf Löttempertur aufheizbar ist.

3. Vorrichtung nach Anspruch 2, **dadurch gekennzeichnet,** daß das Heizelement (5) aus Wolfram, Iridium oder Molybdän besteht und zur Einstrahlung auf die mit Lot (4) versehene Verbindungsstelle angeordnet ist.

4. Vorrichtung nach Anspruch 2 oder 3, **dadurch gekennzeichnet,** daß die Schale (6, 7) durch eine Kühlanordnung (11, 12) kühlbar ist.

5. Vorrichtung nach Anspruch 2, 3 oder 4, **dadurch gekennzeichnet,** daß zwischen der Schale (6, 7) und dem Werkstück (1, 3, 3a, 3b) eine Dichtung (9) aus einem Elastomer angeordnet ist, die vorzugsweise gekühlt ist.

6. Vorrichtung nach einem der Ansprüche 2 bis 5, **dadurch gekennzeichnet,** daß zwischen der Schale (6, 7) und dem Werkstück (1, 3) eine plastisch verformbare metallische Dichtung (10) vorgesehen ist.

7. Vorrichtung nach einem der Ansprüche 2 bis 6 für einen mit einem Rohr (3) zu verbindenden Rohrboden (1), **dadurch gekennzeichnet,** daß eine erste, an der rohrabgewandten Seite des Rohrbodens (1) gasdicht anliegende Schale (6) vorhanden ist, und daß eine zweite, das Rohr (3) teilweise umfassende und an der rohrzugewandten Seite des Rohrbodens (1) gasdicht anliegende Schale (7) vorhanden ist.

8. Vorrichtung nach Anspruch 7, **dadurch gekennzeichnet,** daß das Heizelement (5) im Inneren des Rohres (3) im Bereich des Rohrbodens (1) angeordnet ist.

9. Vorrichtung nach Anspruch 7 oder 8, **dadurch gekennzeichnet,** daß das Rohr (3) an seinem freien Ende mit einem Stopfen (13) fest verschlossen ist.

10. Vorrichtung nach Anspruch 7, 8 oder 9, **dadurch gekennzeichnet,** daß im Raum zwischen der Verbindungsstelle und den Schalen (6, 7) sowie im freien Ende des Rohres (3) jeweils eine Wärmeisolierung (15) angeordnet ist.

11. Vorrichtung nach einem der Ansprüche 2 bis 6 für zwei miteinander zu verlötende Rohrschüsse (3a, 3b), **dadurch gekennzeichnet,** daß eine erste und eine zweite Halbschale (7a, 7b) vorgesehen sind, durch die der erste bzw. zweite Rohrschuß (3a, 3b) gasdicht hindurchführbar ist.

12. Vorrichtung nach Anspruch 11, **dadurch**

gekennzeichnet, daß das Heizelement (5) die Gestalt mehrerer, parallel zur Längsachse der Rohrschüsse (3a, 3b) um diese gruppierter Heizdrähte hat.

13. Vorrichtung nach Anspruch 11 oder 12, dadurch gekennzeichnet, daß in den Halbschalen (7a, 7b) und vorzugsweise auch in den Rohrschüssen (3a, 3b) je eine Wärmeisolierung (15) angeordnet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 076 467 (KERNFORSCHUNGSANLAGE JÜLICH GmbH) <br> * Anspruch 1 * <br> --- | 1 | C 04 B 37/00 |
| A | DE-A-3 003 186 (DORNIER SYSTEM GmbH) <br> * Anspruch 1 * <br> --- | 1 | |
| A | EP-A-0 236 856 (KERNFORSCHUNGSANLAGE JÜLICH GmbH) <br> * Anspruch 1; Beispiel 3 * <br> ----- | 1 | |
| | | | **RECHERCHIERTE SACHGEBIETE (Int. Cl.5)** <br><br> C 04 B 37/00 |

Der vorliegende Recherchenbericht wurde für alle Patentansprüche erstellt

| Recherchenort | Abschlußdatum der Recherche | Prüfer |
|---|---|---|
| DEN HAAG | 18-09-1989 | HAUCK, H.N. |